# EUROPEAN PATENT APPLICATION

(11) **EP 4 797 886 A1**
(43) Date of publication of application: **26.08.2026**
(21) Application number: 24896357.1
(22) Date of filing: 19.11.2024
(51) Int. Cl.: H05K 5/02, H05K 5/03, H05K 5/06, H01M 50/20, H02J 15/00

(54) **ENERGY STORAGE APPARATUS HAVING EXPLOSION VENTING FUNCTION, EXPLOSION VENTING STRUCTURE, AND ENERGY STORAGE SYSTEM**

(30) Priority: 30.11.2023 CN 202323264755 U
(71) Applicant: Huawei Digital Power Technologies Co., Ltd., Shenzhen, Guangdong 518043 (CN)
(72) Inventor: LI, Weiguo, Shenzhen, Guangdong 518043 (CN); ZHANG, Xuechao, Shenzhen, Guangdong 518043 (CN); LI, Limou, Shenzhen, Guangdong 518043 (CN); LIU, Zongzhe, Shenzhen, Guangdong 518043 (CN); YU, Tao, Shenzhen, Guangdong 518043 (CN)
(74) Representative: Isarpatent
(86) International application number: PCT/CN2024/133048
(87) International publication number: WO 2025/113266

(57) **Abstract**

An energy storage apparatus (1) having an explosion vent function, an explosion vent structure (20), and an energy storage system (1000) are provided. The energy storage apparatus (1) includes a housing (10), an explosion vent panel (30), and a battery module (60). The energy storage apparatus (1) further includes a stud (46) and a screw (42) that are configured to fasten the explosion vent panel (30) to the housing (10). One end of the stud (46) is fastened in a sealed manner to an internal surface (31) that is of the explosion vent panel (30) and that faces an accommodating cavity (101). The stud (46) protrudes toward the accommodating cavity (101), and a through hole (461) is provided on an end face of the other end of the stud (46) in an extension direction of the stud (46). A fastening hole (103) is provided in a region that is of the housing (10) and that overlaps with the explosion vent panel (30). The screw (42) located in the accommodating cavity (101) passes through the fastening hole (103) in an extension direction of the screw (42), and is inserted into the through hole (461). The screw (42) and the stud (46) are disposed in the energy storage apparatus (1), and the end of the stud (46) is fastened in a sealed manner to the internal surface (31) that is of the explosion vent panel (30) and that faces the accommodating cavity (101), to avoid water leakage and air leakage at a position of the explosion vent panel (30) where the stud (46) is connected, thereby improving sealing performance. In addition, an explosion vent channel does not need to be considered, and multi-directional explosion venting can be implemented.

## Description

This application claims priority to Chinese Patent Application No. 202323264755.6, filed with the China National Intellectual Property Administration on November 30, 2023 and entitled "ENERGY STORAGE APPARATUS HAVING EXPLOSION VENT FUNCTION, EXPLOSION VENT STRUCTURE, AND ENERGY STORAGE SYSTEM", which is incorporated herein by reference in its entirety.

### TECHNICAL FIELD

This application relates to the field of energy storage device technologies, and in particular, to an energy storage apparatus having an explosion vent function, an explosion vent structure, and an energy storage system.

### BACKGROUND

Currently, battery energy storage apparatuses, due to high flexibility, reliability, and energy density, are gradually applied in fields such as large-scale photovoltaic power generation and wind power generation, to resolve a problem of a significant intermittent fluctuation in power generation. A battery module in the energy storage apparatus is subject to a risk of burning and explosion, bringing a high risk to safe use of the energy storage apparatus.

An explosion vent structure in a related technology includes an explosion vent panel, a screw, and a washer. The screw successively passes through the washer and the explosion vent panel, and is fastened to a housing, to fasten the explosion vent panel to the housing. Because the screw penetrates the explosion vent panel, water leakage and air leakage may be caused.

### SUMMARY

Embodiments of this application provide an energy storage apparatus having an explosion vent function, an explosion vent structure, and an energy storage system, to resolve problems of poor sealing performance and low stability of explosion venting of an energy storage apparatus.

According to a first aspect, an embodiment of this application provides an energy storage apparatus having an explosion vent function, including a housing, an explosion vent panel, and a battery module. The explosion vent panel is located at the top or a side of the housing, and enclosed with the housing to form an accommodating cavity, where the battery module is located in the accommodating cavity. The energy storage apparatus further includes a stud and a screw that are configured to fasten the explosion vent panel to the housing. One end of the stud is fastened in a sealed manner to an internal surface that is of the explosion vent panel and that faces the accommodating cavity. The stud protrudes toward the accommodating cavity, and a through hole is provided on an end face of the other end of the stud in an extension direction of the stud. A fastening hole is provided in a region that is of the housing and that overlaps with the explosion vent panel. The screw located in the accommodating cavity passes through the fastening hole in an extension direction of the screw, and is inserted into the through hole.

In this embodiment, because the end of the stud is fastened in a sealed manner to the internal surface that is of the explosion vent panel and that faces the accommodating cavity, it can be ensured that a position of the internal surface of the explosion vent panel where the end of the stud is connected is in a sealed state and not interconnected to an outer surface, to avoid water leakage and air leakage at the position of the internal surface of the explosion vent panel where the end of the stud is connected. This avoids a decrease in stability of fastening of the explosion vent panel caused by rust of the screw and the stud due to water immersion, thereby improving stability of explosion venting.

In addition, because the screw and the stud are located in the accommodating cavity, the screw successively passes through the washer and the fastening hole of the housing and is fastened to the stud. During explosion venting, the screw drives the washer to bend, and then the washer, the screw, and the explosion vent panel together break away from the housing to implement explosion venting. In the fastening manner in this embodiment, the explosion vent panel, the stud, and the screw can be replaced as a whole conveniently and quickly. In addition, if the stud is fastened onto the housing, it is difficult to replace the stud, and in many cases, the entire housing needs to be replaced. In contrast, in this embodiment, because the stud is located on the explosion vent panel, and the explosion vent panel is not to be used again after explosion venting, replacement costs are low and replacement is very easy.

In some embodiments, one end of the stud is disposed in an integrated molding manner on the internal surface of the explosion vent panel. Because the stud is disposed in the integrated molding manner on the internal surface of the explosion vent panel, there is no need to provide a hole on the explosion vent panel, thereby improving sealing performance of the explosion vent panel, and also improving stability of fastening between the stud and the explosion vent panel.

In some embodiments, one end of the stud is disposed in a welding manner on the internal surface of the explosion vent panel. The stud is welded to the internal surface of the explosion vent panel, and connection between the stud and the explosion vent panel can be implemented without providing a hole on the explosion vent panel, thereby improving sealing performance of the explosion vent panel.

In some embodiments, the housing further includes a conversion bracket located in the accommodating cavity, the conversion bracket includes a side plate and a bottom plate that is parallel to the explosion vent panel, the side plate is fastened to the bottom plate, the bottom plate is the region that is of the housing and that overlaps with the explosion vent panel, the fastening hole is a hole provided on the bottom plate, the side plate is fastened to a side wall of the housing, and the screw successively passes through the fastening hole on the bottom plate in the extension direction and is inserted into the through hole. In this embodiment, the fastening hole is provided on the bottom plate of the conversion bracket connected to the side wall, so that the screw can easily pass through the fastening hole in a direction from inside the accommodating cavity to outside the accommodating cavity and is then fastened into the through hole of the stud. In comparison, if the fastening hole is provided on the side wall, providing the fastening hole on the side wall poses a very high requirement on precision of a position of the fastening hole, subsequent adjustment is inconvenient, and there is greater difficulty in manufacturing the side wall. In this embodiment, the fastening hole is provided on the bottom plate of the conversion bracket, and a position where the conversion bracket needs to be mounted may be adjusted according to a requirement, to facilitate adjustment of the position of the fastening hole. In addition, manufacturing difficulty is low.

In some embodiments, the energy storage apparatus further includes a washer. The washer is located on a side that is of the bottom plate and that is away from the explosion vent panel, and the washer is provided with an assembly hole that penetrates the washer. A diameter of the fastening hole is greater than a maximum radial size of the screw, and a diameter of the assembly hole is greater than a radial size of a shank of the screw and less than a radial size of a head of the screw. The screw successively passes through the assembly hole and the fastening hole, and is inserted into the through hole. In this embodiment, the shank of the screw can pass through the assembly hole, and the head of the screw cannot pass through the assembly hole. The shank of the explosion vent screw successively passes through the assembly hole and the fastening hole, and is fastened to the stud, so that the explosion vent panel can be fastened to the side wall of the housing by using the screw, the washer, the fastening hole, and the stud.

In some embodiments, in an extension direction of the threaded hole, a gap is provided between the other end of the stud and the washer, so that a depth of the through hole of the stud into which the screw enters can be adjusted, to adjust the gap between the end of the stud where the through hole is provided and the washer in the extension direction of the screw. In this way, bearing strength of a sealing ring between the explosion vent panel and the housing can be adjusted, thereby ensuring sealing effect of a joint between the explosion vent panel and the housing.

In some embodiments, in the extension direction of the screw, the other end of the stud is in contact with a side that is of the washer and that faces the explosion vent panel. In this embodiment, the other end of the stud abuts against the washer, to reduce a distance between the washer and the explosion vent panel and prevent the washer from being bent or deformed.

In some embodiments, the energy storage apparatus further includes a sleeve, the sleeve is sleeved on the stud, one end of the sleeve in an axial direction of the sleeve is in contact with a side that is of the washer and that faces the explosion vent panel, and the other end of the sleeve is in contact with a side that is of the explosion vent panel and that faces the accommodating cavity. In this embodiment, because the distance between the washer and the explosion vent panel can be restricted to being not less than a preset distance by using the sleeve, when the distance between the explosion vent panel and the washer is reduced to the preset distance, the sleeve can keep the distance between the washer and the explosion vent panel from being further reduced. In this way, it can be ensured that the sealing ring between the explosion vent panel and the housing can be squeezed by strong stress to ensure sealing performance while no greater squeezing force is applied by the screw to the washer, thereby ensuring that the washer has a normal form. Specifically, one end of the sleeve abuts against the washer, and the other end of the sleeve abuts against the explosion vent panel, so that the sleeve can keep the distance between the explosion vent panel and the washer from being further reduced. In addition, because the sleeve supports the washer, deformation of the washer due to an excessive squeezing force applied by the screw to the washer can be prevented.

In some embodiments, the housing includes a bottom wall and the side wall. In a height direction of the housing, the side wall is connected between the bottom wall and the explosion vent panel. The bottom wall, the side wall, and the explosion vent panel are enclosed to form the accommodating cavity. In this embodiment, because an internal wall of a top surface of the accommodating cavity is formed only by the explosion vent panel, during explosion venting, the entire surface of the accommodating cavity may be opened for an explosion venting operation, therefore providing a strong explosion vent capability. In addition, only proper sealing between the explosion vent panel and the side wall is required, and a sealing step is eliminated. On the whole, sealing performance of the accommodating cavity can be effectively improved, to provide higher waterproof performance and better air-tightness. In addition, because the internal wall of the top surface of the accommodating cavity is formed by the explosion vent panel, all battery modules in the accommodating cavity can properly correspond to the explosion vent panel. When any battery module explodes, explosive gas can more quickly reach and impact the explosion vent panel, thereby improving timeliness of explosion venting of the explosion vent panel.

In some embodiments, the housing includes a bottom wall, a top wall, and a side wall that connects the bottom wall and the top wall. An explosion vent opening is provided on the top wall, and the explosion vent panel is disposed on the top wall and covers the explosion vent opening. The fastening hole is a hole provided in a region that is of the top wall and that overlaps with the explosion vent panel. The screw successively passes through the fastening hole on the top wall in the extension direction and is inserted into the through hole. In this embodiment, because the explosion vent panel is mounted on the top wall, the fastening hole may be directly provided on the top wall, and there is no need to additionally dispose the conversion bracket in the embodiments described previously.

In some embodiments, the energy storage apparatus further includes a safety rope. One end of the safety rope is fastened in a sealed manner to the internal surface of the explosion vent panel, and the other end of the safety rope is connected to the housing. In this embodiment, the safety rope may be employed to keep the explosion vent panel from getting out to hurt a person. In addition, the end that is of the safety rope and that is fastened to the internal surface is connected in a sealed manner to the internal surface of the explosion vent panel, so that a part that is of the explosion vent panel and that is connected to the safety rope is in a sealed state, and there is no need to provide a hole, thereby improving sealing performance.

According to a second aspect, an embodiment of this application provides an explosion vent structure, configured to be connected to a housing. The explosion vent structure includes an explosion vent panel. The explosion vent panel is located at the top or a side of the housing and enclosed with the housing to form an accommodating cavity. The explosion vent structure further includes a stud and a screw that are configured to fasten the explosion vent panel to the housing. One end of the stud is fastened in a sealed manner to an internal surface that is of the explosion vent panel and that faces the accommodating cavity, and the stud protrudes toward the accommodating cavity. A through hole is provided on an end face of the other end of the stud in an extension direction of the stud. A fastening hole is provided in a region that is of the housing and that overlaps with the explosion vent panel. The screw located in the accommodating cavity passes through the fastening hole in an extension direction of the screw, and is inserted into the through hole.

According to a third aspect, an embodiment of this application provides an energy storage system, including a power converter and the energy storage apparatus according to any one of the first aspect. The power converter is connected to the energy storage apparatus, to perform power conversion on a current input to the energy storage apparatus or output from the energy storage apparatus.

According to a fourth aspect, this application provides an energy storage prefabricated cabin, including a power converter and the energy storage apparatus according to any one of the first aspect. The power converter is connected to the energy storage apparatus, to perform power conversion on a current input to the energy storage apparatus or output from the energy storage apparatus.

### BRIEF DESCRIPTION OF DRAWINGS

To describe the technical solutions in embodiments of this application or in the conventional technology more clearly, the following briefly describes the accompanying drawings for describing the embodiments or the conventional technology.
FIG. 1 is a diagram of an application scenario of an energy storage system according to an embodiment of this application;
FIG. 2 is a diagram of a structure of an energy storage apparatus according to an embodiment of this application;
FIG. 3 is an exploded view of the structure of the energy storage apparatus in FIG. 2;
FIG. 4 is an exploded view of a housing, a sealing ring, and an explosion vent panel in the energy storage apparatus in the embodiment in FIG. 2;
FIG. 5 is a diagram of a structure of an explosion vent panel of the energy storage apparatus in the embodiment in FIG. 2 from a bottom-up perspective;
FIG. 6 is an exploded view of the energy storage apparatus in the embodiment in FIG. 2 from a bottom-up perspective after a side wall is partially cut;
FIG. 7 is a partial enlarged view of a position A in FIG. 6;
FIG. 8 is a partial sectional view of the energy storage apparatus in FIG. 2; and
FIG. 9 is a partial sectional view of another energy storage apparatus according to an embodiment of this application.

Reference numerals:
X: extension direction of a screw; L1: spacing; L2: gap; 1000: energy storage system; 1: energy storage apparatus; 2: power converter; 10: housing; 101: accommodating cavity; 102: explosion vent opening; 103: fastening hole; 11: main body; 12: door panel; 13: top wall; 14: bottom wall; 15: side wall; 151: front side wall; 152: rear side wall; 153: left side wall; 154: right side wall; 16: conversion bracket; 161: side plate; 162: bottom plate; 20: explosion vent structure; 30: explosion vent panel; 31: internal surface; 32: outer surface; 40: fastening assembly; 41: fastener; 42: screw; 421: shank; 422: head; 43: washer; 431: assembly hole; 45: connecting piece; 46: stud; 461: through hole; 47: sleeve; 60: battery module; 70: sealing ring; 80: safety rope.

### DESCRIPTION OF EMBODIMENTS

The following first explains some terms in embodiments of this application.

In the specification, the claims, and the accompanying drawings of embodiments of this application, terms such as "first" and "second" are intended to distinguish between similar objects but do not necessarily indicate a specific order or sequence. It should be understood that data used in such a way is interchangeable in proper circumstances, so that embodiments of this application described herein can be, for example, implemented in an order other than the order illustrated or described herein. In addition, the terms "include" and "have" and any variants thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In this specification, terms such as "perpendicularity" and "parallelism" are explained.

Perpendicularity: Perpendicularity defined in this application is not limited to an absolute perpendicular intersection (where an included angle is 90 degrees) relationship. A non-absolute perpendicular intersection relationship caused by factors such as impact of an assembly tolerance, a design tolerance, or structural flatness is allowed. An error within a small range of angles is allowed. For example, an intersection relationship within an assembly error range of the range of 80 degrees to 100 degrees may be understood as a relationship of perpendicularity.

Parallelism: The parallelism defined in this application is not limited to absolute parallelism. The defined parallelism may be understood as being almost parallel, and cases of non-absolute parallelism caused by factors such as impact of an assembly tolerance, a design tolerance, and structural flatness are allowed. In these cases, a sliding fitting portion and a first door panel are not absolutely parallel to each other. However, in this application, the sliding fitting portion and the first door panel in these cases are also defined as being parallel to each other.

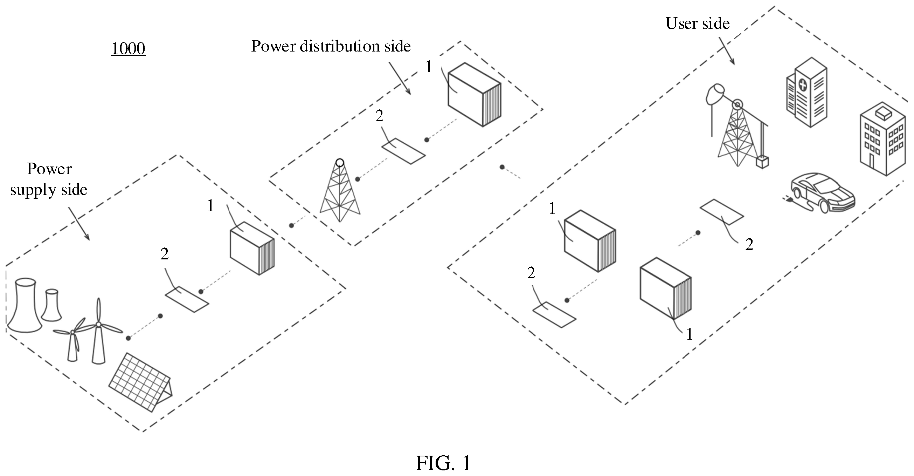

FIG. 1 is a diagram of an application scenario of an energy storage system 1000 according to an embodiment of this application. FIG. 1 shows three scenarios in which the energy storage system 1000 is applied to a power supply side, a power distribution side, and a user side separately.

Refer to FIG. 1. The energy storage system 1000 includes an energy storage apparatus 1 and a power converter 2. The energy storage apparatus 1 is connected to the power converter 2. The energy storage apparatus is configured to store electric energy. The power converter 2 is configured to perform power conversion on a current input to the energy storage apparatus 1 or a current output from the energy storage apparatus 1.

The energy storage system 1000 may be used on the power side, the power distribution side, and the user side. For example, the energy storage system 1000 on the power side provides storage and output management for electric energy output by a direct-current source, the energy storage system 1000 on the power distribution side provides intelligent load management for a power distribution side, and the energy storage system 1000 on the user side provides a peak shaving mode and stable power quality management for a user.

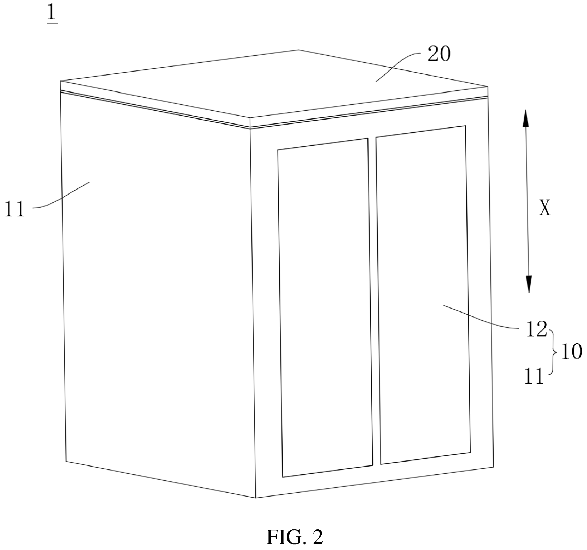

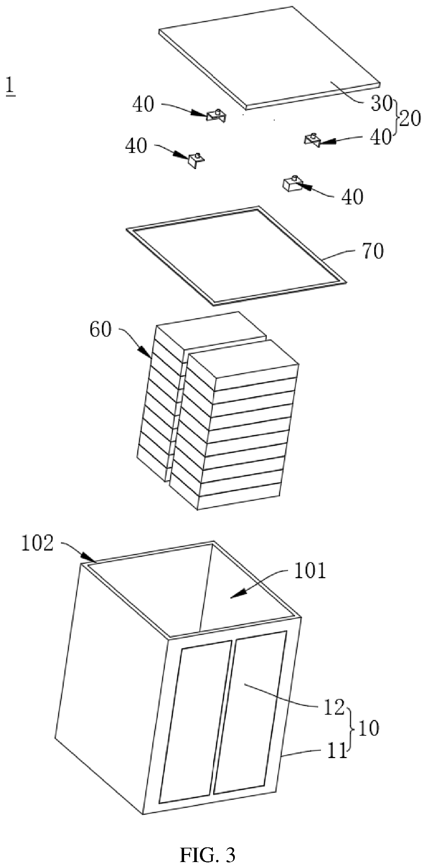

FIG. 2 is a diagram of a structure of an energy storage apparatus 1 according to an embodiment of this application. FIG. 3 is an exploded view of the structure of the energy storage apparatus 1 in FIG. 2.

Refer to FIG. 2 and FIG. 3. The energy storage apparatus 1 includes a housing 10, an explosion vent structure 20, and a battery module 60. The explosion vent structure 20 is connected to the housing 10 and enclosed with the housing 10 to form a closed accommodating cavity 101. The battery module 60 is located in the accommodating cavity 101. The explosion vent structure 20 is mounted on the housing 10, and when pressure in the accommodating cavity 101 increases abruptly (for example, the battery module 60 explodes or is burnt), the explosion vent structure 20 can quickly vent air pressure from the accommodating cavity 101, thereby implementing rapid pressure reduction to prevent the housing 10 from being disintegrated to hurt a person.

The explosion vent structure 20 in this embodiment is applicable to not only the energy storage apparatus 1 in FIG. 2, but also other devices that need explosion venting, for example, applied to a gas storage tank (for example, a gas storage tank of hydrogen, natural gas, or nitrogen) that stores high-pressure gas, a liquid energy storage system 1000 (for example, a liquid nitrogen tank or a liquid hydrogen storage tank), and some supercapacitor energy storage systems 1000.

The explosion vent structure 20 includes an explosion vent panel 30 and fastening assemblies 40. The explosion vent panel 30 is connected to the housing 10 and enclosed with the housing 10 to form a closed accommodating cavity 101. The fastening assemblies 40 are configured to fasten the explosion vent panel 30 to the housing 10. During explosion venting, the fastening assemblies 40 are broken or no longer effective, and the explosion vent panel 30 breaks away from the housing 10.

The battery module 60 is configured to store and output electric energy. Specifically, the battery module 60 includes a plurality of battery packs, and each battery pack further includes a plurality of electrochemical cells.

In some embodiments, the housing 10 includes a main body 11 and a door panel 12 on the main body 11. The door panel 12 is configured to open or close the accommodating cavity 101, and also facilitates a user's operation and use.

In some implementations, the housing 10 is provided with an explosion vent opening 102 used to mount the explosion vent structure 20. The explosion vent opening 102 interconnects the accommodating cavity 101 to the outside. The explosion vent panel 30 is mounted at the explosion vent opening 102, and seals the explosion vent opening 102. When explosion venting is required, the explosion vent panel 30 opens the explosion vent opening 102 to vent air from the accommodating cavity 101, to implement directional explosion venting through the explosion vent opening 102, thereby preventing the housing 10 from being disintegrated to hurt a person.

It may be understood that the explosion vent panel 30 may be mounted on the top or a side of the housing 10. For example, when the housing 10 is approximately rectangular, the explosion vent panel 30 may be mounted on a top wall of the housing 10, or may be mounted on a side wall of the housing 10.

In some embodiments, a shape of the housing 10 may alternatively be approximately a cuboid, a square, or a prism.

It may be understood that there may be one, two, or another quantity of explosion vent structures 20 in the energy storage apparatus 1 in embodiments of this application. This is not specifically limited in this application.

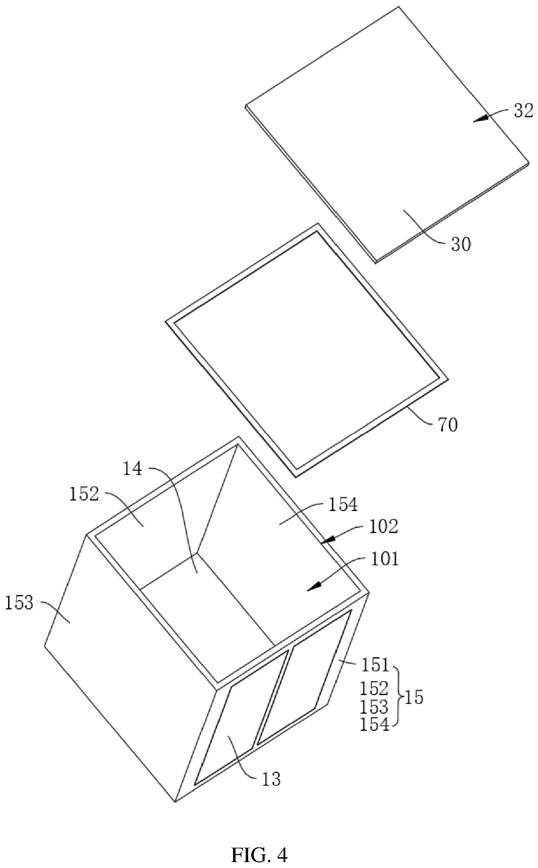

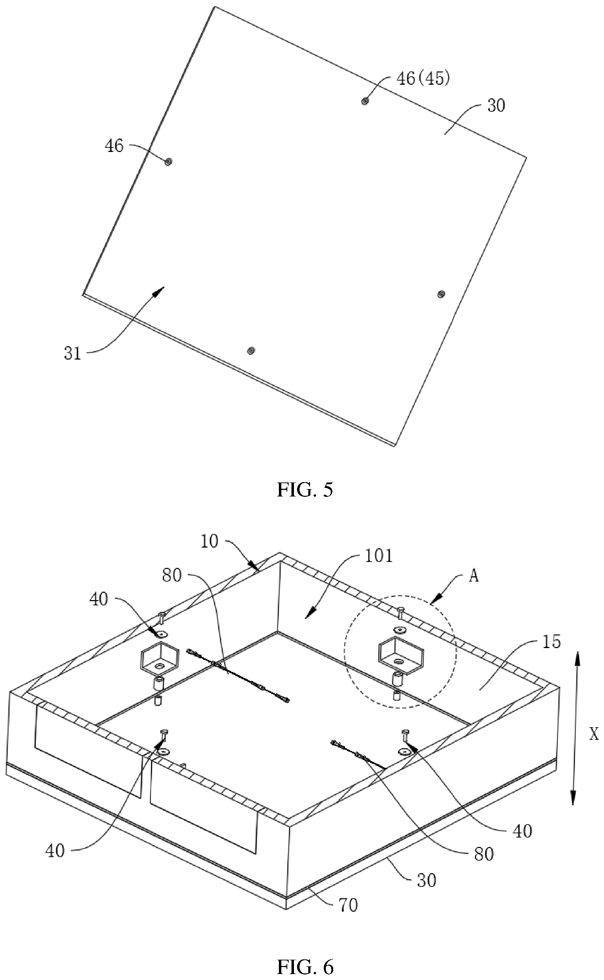

FIG. 4 is an exploded view of the housing 10, a sealing ring 70, and the explosion vent panel 30 in the energy storage apparatus 1 in the embodiment in FIG. 2. FIG. 5 is a diagram of a structure of the explosion vent panel 30 in the energy storage apparatus 1 in the embodiment in FIG. 2 from a bottom-up perspective.

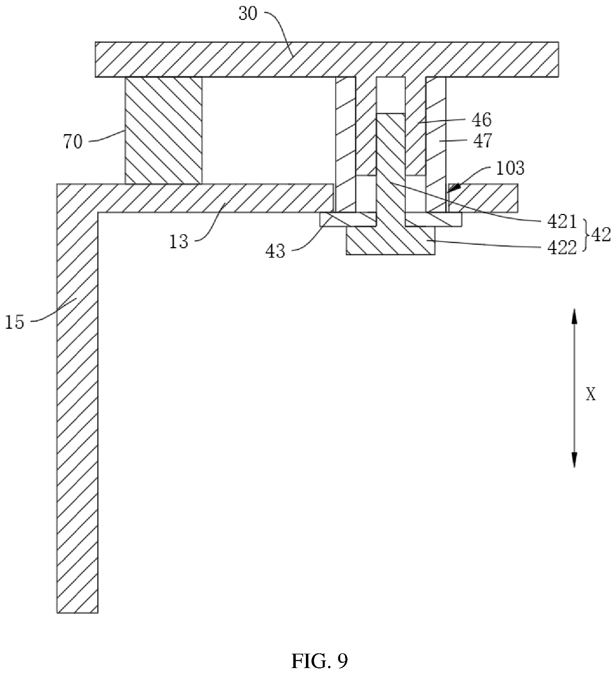

Refer to FIG. 4 and FIG. 5. In some embodiments, the housing 10 includes a bottom wall 14 and a plurality of side walls 15. The plurality of side walls 15 are separately connected to the bottom wall 14, and are enclosed with the bottom wall 14 to form an accommodating slot. Specifically, one end of the plurality of side walls 15 each is connected in a sealed manner to the bottom wall 14, the plurality of side walls 15 are in a vertical relationship with the bottom wall 14, and a direction perpendicular to the bottom wall 14 is a height direction of the housing 10. The other ends of the plurality of side walls 15 are enclosed in the height direction of the housing 10 to form the explosion vent opening 102 that is interconnected to the accommodating slot. The explosion vent panel 30 is fastened to the other ends of the plurality of side walls 15 by using the fastening assemblies 40, and seals and covers the explosion vent opening 102, to seal the accommodating slot to form the closed accommodating cavity 101. Because the explosion vent panel 30 is fastened onto the plurality of side walls 15 by using the fastening assemblies 40, an internal wall of a top surface of the accommodating cavity 101 is formed only by the explosion vent panel 30. In addition, because the explosion vent panel 30 forms the internal wall of the top surface of the accommodating cavity 101, in comparison with a solution in which the housing 10 includes a top wall and the explosion vent panel 30 is located on the top wall (as shown in the embodiment in FIG. 9), this has at least the following advantages.

First, the internal wall of the top surface of the accommodating cavity 101 is formed only by the explosion vent panel 30, so that during explosion venting, the entire top surface of the accommodating cavity 101 may be opened for an explosion vent operation, therefore providing a strong explosion vent capability.

Second, comparatively, in a solution in which a top wall is first mounted on the side wall 15 and then the explosion vent panel 30 is mounted on the top wall, sealing between the top wall and the side wall 15 needs to be ensured, and sealing between the top wall and the mounting plate also needs to be ensured. If sealing effect is poor at one position, a problem of water leakage and air leakage occurs consequently. In addition, because the explosion vent panel 30 is mounted on the top wall of the housing 10, water may accumulate on the top wall, and then flow to the explosion vent opening 102 on the top wall. As a result, it is difficult to seal the explosion vent panel 30 mounted at the explosion vent opening 102 on the top wall. In this embodiment, the internal wall of the top surface of the accommodating cavity 101 is formed only by the explosion vent panel 30, proper sealing between the explosion vent panel 30 and the side wall 15 is required only, and a sealing step is eliminated. On the whole, sealing performance of the accommodating cavity 101 can be effectively improved, to provide higher waterproof performance and better air-tightness. In addition, when the internal wall of the top surface of the accommodating cavity 101 is formed by the explosion vent panel 30 alone instead of being formed by a plurality of parts (for example, formed by the top wall of the housing 10 and the explosion vent panel 30), even if water accumulates on the explosion vent panel 30, no water leakage occurs, thereby effectively reducing a risk of water leakage.

Third, comparatively, in the solution in which the top wall is first mounted on the side wall 15 and then the explosion vent panel 30 is mounted on the top wall, when the battery module 60 that does not directly correspond to the explosion vent panel 30 in the height direction of the housing 10 explodes, a motion path of a large amount of generated gas takes the lead to impact the top wall from the front, and then the gas is conveyed to the explosion vent panel 30 through the top wall. In this case, a motion direction of the gas is approximately a direction that is horizontal to the explosion vent panel 30. Consequently, an impact force to the explosion vent panel 30 is small, and the explosion vent panel 30 cannot normally start explosion venting in a timely manner. In addition, because the gas first passes through the top wall and then reaches the explosion vent panel 30, timeliness of explosion venting is further delayed. In this implementation, because the internal wall of the entire top surface of the accommodating cavity 101 is formed by the explosion vent panel 30, the battery module 60 in the accommodating cavity 101 can properly correspond to the explosion vent panel 30 in the height direction of the housing 10. When any battery module 60 explodes, because explosive gas does not need to be conveyed through the top wall of the housing 10, the explosive gas can more quickly reach and impact the explosion vent panel 30, thereby improving timeliness of explosion venting of the explosion vent panel 30.

In some implementations, a sealing ring 70 is disposed between the explosion vent panel 30 and an end face of an end that is of the plurality of side walls 15 and that faces the explosion vent panel 30, so that sealing performance of connection between the explosion vent panel 30 and the plurality of side walls 15 can be enhanced by using the sealing ring 70.

In some implementations, the plurality of side walls 15 include a front side wall 151, a rear side wall 152, a left side wall 153, and a right side wall 154. The front side wall 151, the left side wall 153, the rear side wall 152, and the right side wall 154 are successively connected to each other in a head-to-tail manner. The accommodating cavity 101 formed by enclosing the bottom wall 14, the explosion vent panel 30, and the plurality of side walls 15 is approximately in a cuboid shape. In this embodiment, a front internal wall of the accommodating cavity 101 is formed by the front side wall 151, a rear internal wall of the accommodating cavity 101 is formed by the rear side wall 152, a left internal wall of the accommodating cavity 101 is formed by the left side wall 153, and a right internal wall of the accommodating cavity 101 is formed by the right side wall 154.

It may be understood that, in some other implementations, the explosion vent panel 30 may not form the internal wall of the top surface of the accommodating cavity 101. Instead, an internal wall of another surface of the accommodating cavity 101 is formed by using the explosion vent panel 30.

It may be understood that, in some other implementations, there is not necessarily one explosion vent panel 30. For example, there may be two explosion vent panels 30, where two surfaces of the accommodating cavity 101 may be formed by using the explosion vent panels 30.

In some related embodiments in the art, the explosion vent panel 30 is provided with a fastening hole, the fastening assembly 40 includes a screw 42, a washer 43, and a stud 46. The stud 46 is fastened to the housing 10. The screw 42 successively passes through the washer 43 and the fastening hole, and is fastened to the stud 46, to fasten the explosion vent panel 30 to the housing 10. In this embodiment, because the explosion vent panel 30 is provided with the fastening hole, the fastening hole needs to be sealed. However, problems of poor sealing effect and air leakage and water leakage may still be caused. In addition, because a part of the screw 42 is located outside the accommodating cavity 101, the screw 42 may be soaked by rainwater, and is prone to corrosion and rust after a long period of time, resulting in a decrease in stability of fastening of the explosion vent panel 30.

In addition, the washer 43 has low strength. When the screw 42 is being fastened, stress applied to the washer 43 cannot be too high. If the screw 42 is fastened too tightly, the washer 43 is bent, starting stress of the explosion vent panel 30 changes, and stability of explosion venting is low. When the screw 42 is fastened too loosely, air-tightness is poor at a position where the screw 42 is mounted on the explosion vent panel 30, and water leakage and air leakage may be caused.

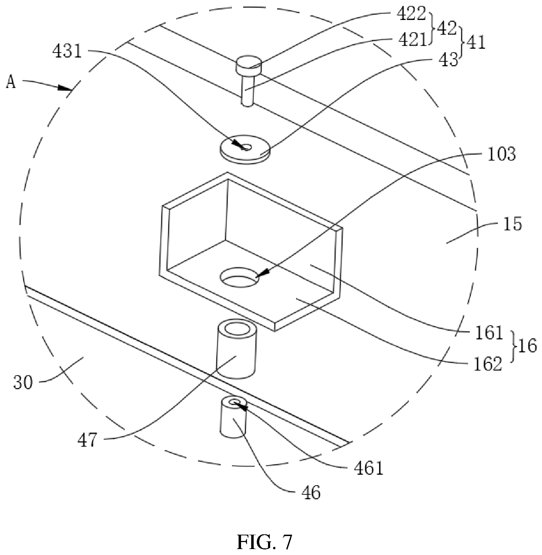

FIG. 6 is an exploded view of the energy storage apparatus 1 in the embodiment in FIG. 2 from a bottom-up perspective after the side wall 15 is partially cut. The figure includes an exploded view of a structure of the fastening assembly 40. FIG. 7 is a partial enlarged view of a position A in FIG. 6.

Refer to FIG. 6 and FIG. 7. In some embodiments, the fastening assembly 40 is fastened to a side that is of the explosion vent panel 30 and that faces the accommodating cavity 101, and is fastened to the housing 10. In this embodiment, because the fastening assembly 40 is connected to a side that is of the explosion vent panel 30 and that faces the accommodating cavity 101, and then fastens the explosion vent panel 30 to the housing 10, such a design does not need a fastening hole on the explosion vent panel 30 for fastening the explosion vent panel 30. In this way, there is no problem of poor sealing at the fastening hole, and water leakage and air leakage at the fastening hole are avoided, thereby avoiding a decrease in stability of fastening of the explosion vent panel 30 caused by rust of the fastening assembly 40 due to water immersion.

Specifically, the explosion vent panel 30 includes an internal surface 31 and an outer surface 32 that are opposite to each other. The internal surface 31 faces the accommodating cavity 101, and the outer surface 32 is away from the accommodating cavity 101. The fastening assembly 40 includes a connecting piece 45. One end of the connecting piece 45 is fastened in a sealed manner to the internal surface 31. In other words, a region that is of the internal surface 31 and that is connected to the connecting piece 45 seals and covers all areas enclosed by an outer contour of an end face of the fastening assembly 40, that is, seals and covers all regions enclosed by the outer contour of the end face of the fastening assembly 40. In this embodiment, because the internal surface 31 seals and covers the regions enclosed by the outer contour of the end face of the connecting piece 45, it can be ensured that a position of the internal surface 31 of the explosion vent panel 30 where the fastening assembly 40 is connected is in a sealed state and not interconnected to the outer surface 32, that is, not interconnected to the outside of the accommodating cavity 101. The position of the explosion vent panel 30 where the fastening assembly 40 is connected is in the sealed state. This can avoid water leakage and air leakage at the position of the explosion vent panel 30 where the fastening assembly 40 is connected. This avoids a decrease in the stability of fastening of the explosion vent panel 30 caused by rust of the fastening assembly 40 due to water immersion, thereby improving stability of explosion venting.

Refer to FIG. 6 to FIG. 8. In some embodiments, the fastening assembly 40 includes a fastener 41 and a connecting piece 45. The fastener 41 is fastened to the connecting piece 45, to fasten the explosion vent panel 30 to the housing 10. One end of the connecting piece 45 is connected in a sealed manner to the internal surface 31 of the explosion vent panel 30, so that when the fastener 41 is fastened to the connecting piece 45, the fastener 41 does not need to pass through the explosion vent panel 30 for fastening, that is, there is no need to provide a hole on the explosion vent panel 30, thereby improving overall sealing performance of the explosion vent panel 30, and avoiding water leakage and air leakage.

In this embodiment, the fastener 41 may be connected to the connecting piece 45 in a snap-fit manner, or in a threaded manner, or the like.

In some embodiments, the connecting piece 45 is a stud 46, and the fastener 41 includes a screw 42.

In some implementations, the stud 46 is disposed in an integrated molding manner on the internal surface 31 of the explosion vent panel 30. Specifically, one end of the stud 46 is disposed in the integrated molding manner on the internal surface 31 of the explosion vent panel 30. Because the stud 46 is disposed in the integrated molding manner on the internal surface 31 of the explosion vent panel 30, and there is no need to provide a hole on the explosion vent panel 30, thereby improving the sealing performance of the explosion vent panel 30 and improving stability of fastening between the stud 46 and the explosion vent panel 30.

In some implementations, the stud 46 is welded to the internal surface 31 of the explosion vent panel 30. Specifically, one end of the stud 46 is welded to the internal surface 31 of the explosion vent panel 30. The stud 46 is welded to the internal surface 31 of the explosion vent panel 30, and the stud 46 can be connected to the explosion vent panel 30 also without needing to provide a hole on the explosion vent panel 30, thereby improving the sealing performance of the explosion vent panel 30.

In some implementations, the stud 46 may alternatively be bonded to the internal surface 31 of the explosion vent panel 30. Specifically, one end of the stud 46 is bonded to the internal surface 31 of the explosion vent panel 30. This can also improve the sealing performance of the explosion vent panel 30.

Refer to FIG. 6 to FIG. 8. In some embodiments, the stud 46 protrudes toward the accommodating cavity 101. A through hole 461 is provided on an end face of the other end of the stud 46 in an extension direction of the stud 46. A fastening hole 103 is provided in a region that is of the housing 10 and that overlaps with the explosion vent panel 30. The screw 42 located in the accommodating cavity 101 passes through the fastening hole 103 in an extension direction X of the screw 42, and is inserted into the through hole 461, so that the screw 42 is fastened to the stud 46. In this embodiment, the explosion vent panel 30 can be fastened to the top or the side of the housing 10 through fitting between the screw 42 and the stud 46. Because the screw 42 and the stud 46 are located in the accommodating cavity 101, the extension direction of the screw 42 during the fastening of the screw 42 is a direction from an internal side of the accommodating cavity 101 to an outer side of the accommodating cavity 101. In this way, the screw 42, the stud 46, and the like configured to fasten the explosion vent panel 30 do not pass through the explosion vent panel 30, thereby improving air-tightness of the explosion vent panel 30. In addition, the screw 42, the stud 46, and the like are invisible in appearance, so that the appearance is more nice-looking.

In some implementations, the through hole 461 at the other end of the stud 46 is a threaded hole, and a part that is of the screw 42 and that is inserted into the through hole 461 is threaded into the through hole 461.

In some implementations, the fastener 41 further includes a washer 43. The screw 42 first passes through the washer 43, then passes through the fastening hole 103 on the housing 10, and then is connected to the stud 46. Because the stud 46 is disposed on the explosion vent panel 30, during explosion venting, the screw 42 drives the washer 43 to bend, and then the washer 43 and the screw 42 are driven by the explosion vent panel 30 to break away from the fastening hole 103 on the housing 10. The screw 42, the washer 43, and the explosion vent panel 30 break away from the housing 10 simultaneously to implement explosion venting, thereby facilitating overall replacement of the explosion vent panel 30 and the fastening assembly 40, to more quickly assemble the new explosion vent panel 30 and the fastening assembly 40. In addition, when the stud 46 and the screw 42 are connected in a threaded manner, external thread of the screw 42 and internal thread of the through hole 461 of the stud 46 are greatly damaged during explosion venting. As a result, when the stud 46 is used again, stability of fastening is poor and a new stud 46 is usually required for replacement. If the stud 46 is fastened to the housing 10, there is great difficulty in replacement and the entire housing 10 needs to be replaced in many cases. In this embodiment, because the stud 46 is located on the explosion vent panel 30, and the explosion vent panel 30 is not to be used again after explosion venting, replacement costs are low and replacement is very easy.

It may be understood that the washer 43 has low strength but the strength of the washer 43 before explosion venting is enough to limit movement of the explosion vent panel 30 relative to the housing 10. However, after explosion venting, the explosion vent panel 30 is subject to high stress, and the washer 43 is deformed. After the washer 43 is deformed, the movement of the explosion vent panel 30 relative to the housing 10 cannot be limited.

In some implementations, the washer 43 is made of an aluminum or aluminum alloy material. Certainly, in some other implementations, the washer 43 may be made of a copper material, or may be made of some non-metal materials whose strength is not very high. For example, the washer 43 is made of some rubber materials.

Refer to FIG. 3 to FIG. 7. In some embodiments, the internal wall of the top surface of the accommodating cavity 101 is formed by the explosion vent panel 30, and the housing 10 further includes a conversion bracket 16 located in the accommodating cavity 101. The conversion bracket 16 includes a side plate 161 and a bottom plate that is parallel to the explosion vent panel 30. The side plate 161 is fastened to the bottom plate 162. The bottom plate 162 is the region that is of the housing 10 and that overlaps with the explosion vent panel 30. The fastening hole 103 is a hole provided on the bottom plate 162. The side plate 161 is fastened to the side wall 15 of the housing 10. The screw 42 successively passes through the fastening hole 103 on the bottom plate 162 in the extension direction, and is inserted into the through hole 461. In this embodiment, the fastening hole 103 is provided on the bottom plate 162 of the conversion bracket 16 connected to the side wall 15, so that the screw 42 can easily pass through the fastening hole 103 in a direction from inside the accommodating cavity 101 to outside the accommodating cavity 101 and is then fastened into the through hole 461 of the stud 46. In comparison, if the fastening hole 103 is provided on the side wall 15, providing the fastening hole 103 on the side wall 15 poses a very high requirement on precision of a position of the fastening hole 103, subsequent adjustment is inconvenient, and there is greater difficulty in manufacturing the side wall 15. In this embodiment, the fastening hole 103 is provided on the bottom plate 162 of the conversion bracket 16, and a position where the conversion bracket 16 needs to be mounted may be adjusted according to a requirement, to facilitate adjustment of the position of the fastening hole 103. In addition, manufacturing difficulty is low.

In some implementations, the bottom plate 162 and the side plate 161 of the conversion bracket 16 are disposed at an included angle to each other, for example, disposed vertically to each other, to facilitate fastening of the side plate 161 to the side wall 15 of the housing 10.

In some implementations, the side plate 161 and the bottom plate 162 of the conversion bracket are connected in an integrated molding manner, to improve strength of connection between the side plate 161 and the bottom plate 162. It may be understood that the conversion bracket 16 may be directly connected to the side wall 15 of the housing 10. For example, the conversion bracket 16 may be directly fastened to the side wall 15 by using a bolt, or may be directly fastened through welding, or may be fastened both through welding and by using a bolt to enhance the strength of fastening. Certainly, the conversion bracket 16 may alternatively be indirectly connected to the side wall 15 of the housing 10. For example, a beam is first fastened to the side wall 15 of the housing 10, and then the conversion bracket 16 is fastened to the beam.

Specifically, the washer 43 is located on a side that is of the bottom plate 162 and that is away from the explosion vent panel 30.

In some implementations, the washer 43 is provided with an assembly hole 431 that penetrates the washer 43. A diameter of the fastening hole 103 is greater than a maximum radial size of the screw 42 and less than a maximum size of the washer 43. A diameter of the assembly hole 431 is greater than a radial size of a shank 421 of the screw 42 and less than a radial size of a head 422 of the screw 42. The shank 421 of the screw 42 successively passes through the assembly hole 431 and the fastening hole 103, and is inserted into the through hole 461. In this implementation, the shank 421 of the screw 42 can pass through the assembly hole 431, and the head 422 of the screw 42 cannot pass through the assembly hole 431. The shank 421 of the explosion vent screw successively passes through the assembly hole 431 and the fastening hole 103, and is fastened to the stud 46, so that the explosion vent panel 30 can be fastened to the side wall 15 of the housing 10 by using the screw 42, the washer 43, the fastening hole 103, and the stud 46.

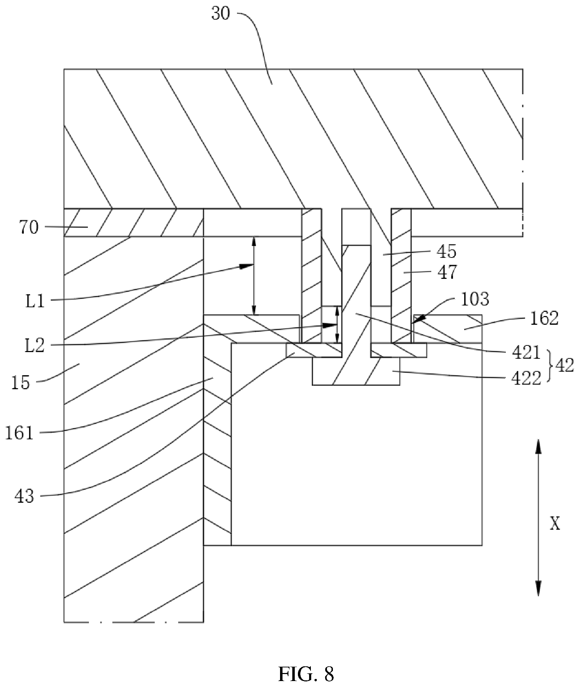

FIG. 8 is a partial sectional view of the energy storage apparatus 1 in FIG. 2, where a sectional position is a position at which the fastening assembly 40 is fastened to the explosion vent panel 30 and the housing 10.

Refer to FIG. 8. In some embodiments, in the extension direction X of the screw 42, a spacing L1 is provided between the conversion bracket 16 and the explosion vent panel 30, so that the bearing strength of the sealing ring 70 between the explosion vent panel 30 and the housing 10 can be adjusted by adjusting the spacing L1 between the explosion vent panel 30 and the conversion bracket 16, thereby ensuring sealing effect of a joint between the explosion vent panel 30 and the housing 10.

In some implementations, in the extension direction X of the screw 42, a gap L2 is provided between one end of the stud 46 where the through hole 461 is provided and the washer 43, so that a depth of the through hole 461 of the stud 46 into which the screw 42 enters can be adjusted by rotating the screw 42, to adjust the gap L2 between the end of the stud 46 where the through hole 461 is provided and the washer 43 in the extension direction X of the screw 42. In this way, the bearing strength of the sealing ring 70 between the explosion vent panel 30 and the housing 10 is adjusted, thereby ensuring sealing effect of the joint between the explosion vent panel 30 and the housing 10.

It may be understood that a magnitude of the starting stress of the explosion vent panel 30 of the energy storage apparatus 1 depends on the strength of the washer 43 to some extent. If the washer 43 is more prone to deformation, the starting stress of the explosion vent panel 30 is lower. If the washer 43 is less prone to deformation, the starting stress of the explosion vent panel 30 is higher. It should be noted that, the starting stress in this embodiment of this application means that the explosion vent panel 30 plays the explosion vent function when a pressure reaching the starting stress acts on the explosion vent panel 30. For example, when a pressure in the accommodating cavity 101 reaches the starting stress, the explosion vent panel 30 at least partially breaks way from the housing 10, thereby implementing the explosion vent function.

In addition, a status of the washer 43 after being fastened also affects the starting stress of the explosion vent panel 30. Because the washer 43 has low strength, metal fatigue may be generated and irreversible. Therefore, when the screw 42 is being fastened, if the screw 42 is fastened too tightly, the washer 43 is prone to damage or irreversible deformation is caused, affecting the starting stress of the explosion vent panel 30. If the screw 42 is fastened too loosely, the sealing ring 70 between the explosion vent panel 30 and the housing 10 is squeezed with insufficient strength, causing a problem of poor air-tightness between the explosion vent panel 30 and the housing 10.

To prevent the washer 43 from being bent because the screw 42 and the stud 46 are fastened too tightly, and prevent the sealing ring 70 between the explosion vent panel 30 and the housing 10 from being squeezed with insufficient strength because the screw 42 and the stud 46 are fastened too loosely, as shown in FIG. 6 to FIG. 8, in some embodiments, the fastening assembly 40 further includes a sleeve 47. The sleeve 47 is located between the explosion vent panel 30 and the washer 43, and is configured to restrict a distance between the washer 43 and the explosion vent panel 30 to being not less than a preset distance. It should be noted that, when the distance is the preset distance, it can be ensured that the sealing ring 70 between the explosion vent panel 30 and the housing 10 can be squeezed by strong stress to ensure sealing performance while no greater squeezing force is applied by the screw 42 to the washer 43, thereby ensuring that the washer 43 has a normal form and the starting press of the explosion vent panel 30 is not affected.

Specifically, in a process of continuously fastening the screw 42, a position of the conversion bracket 16 remains unchanged, and a position of the washer 43 remains unchanged. The screw 42 drives the stud 46 to move toward the washer 43 in the extension direction X of the screw 42, thereby driving the explosion vent panel 30 to squeeze the sealing ring 70 between the explosion vent panel 30 and the housing 10 in the extension direction X of the screw 42 and move toward the washer 43. It may be understood that, if the sealing ring 70 between the explosion vent panel 30 and the housing 10 is squeezed with greater strength, the distance between the explosion vent panel 30 and the washer 43 is smaller, and the washer 43 is more prone to deformation because the washer 43 is subject to greater stress from a cap of the screw 42. Because the distance between the washer 43 and the explosion vent panel 30 can be restricted to being not less than the preset distance by using the sleeve 47, when the distance between the explosion vent panel 30 and the washer 43 is reduced to the preset distance, the sleeve 47 can keep the distance between the washer 43 and the explosion vent panel 30 from being further reduced. In this way, it can be ensured that the sealing ring 70 between the explosion vent panel 30 and the housing 10 can be squeezed by strong stress to ensure sealing performance while no greater squeezing force is applied by the screw 42 to the washer 43, thereby ensuring that the washer 43 has a normal form.

In some implementations, the sleeve 47 is sleeved on the stud 46 in the extension direction X of the screw 42, and the sleeve 47 is connected to the stud 46 in a gap manner, so that the sleeve 47 and the stud 46 slide relative to each other in the extension direction X of the screw 42.

Specifically, when the distance between the explosion vent panel 30 and the washer 43 reaches the preset distance, in the extension direction X of the screw 42, one end of the sleeve 47 abuts against the washer 43, and the other end of the sleeve 47 abuts against the explosion vent panel 30, so that the sleeve 47 can keep the distance between the explosion vent panel 30 and the washer 43 from being further reduced. In addition, because the sleeve 47 supports the washer 43 in the extension direction X of the screw 42, deformation of the washer 43 due to an excessive squeezing force applied by the screw 42 to the washer 43 can be prevented.

Specifically, an outer diameter of the sleeve 47 is less than the fastening hole 103, and an internal diameter of the sleeve 47 is greater than the stud 46. When the distance between the washer 43 and the explosion vent panel 30 reaches the preset distance, one end of the sleeve 47 can pass through the fastening hole 103 and abut against the washer 43, to keep the distance between the explosion vent panel 30 and the washer 43 from being further reduced.

In some implementations, a length of the sleeve 47 in the extension direction X of the screw 42 is equal to the preset distance between the washer 43 and the explosion vent panel 30, so that when the distance between the washer 43 and the explosion vent panel 30 reaches the preset distance, one end of the sleeve 47 can pass through the fastening hole 103 and abut against the washer 43.

In some other implementations, there is no sleeve 47 according to computation of a length of the stud 46. When the distance between the washer 43 and the explosion vent panel 30 reaches the preset distance, one end of the stud 46 abuts against the washer 43, so that the distance between the washer 43 and the explosion vent panel 30 is further reduced, and the washer 43 can be prevented from being bent or deformed.

Certainly, the length of the stud 46 may be precisely controlled, the sleeve 47 is disposed, and the length of the stud 46 is the same as the length of the sleeve 47. When the distance between the washer 43 and the explosion vent panel 30 reaches the preset distance, both one end of the stud 46 and one end of the sleeve 47 abut against the washer 43, to prevent the washer 43 from being bent or deformed.

Refer to FIG. 6. In some embodiments, the energy storage apparatus 1 further includes a safety rope 80. One end of the safety rope 80 is fastened to the internal surface 31, the other end of the safety rope 80 is connected to the housing 10, and a region enclosed by an outer contour of an end that is of the safety rope 80 and that is fastened to the internal surface 31 is sealed and covered by the internal surface 31. Using the safety rope 80 can keep the explosion vent panel 30 from getting out to hurt a person. When the explosion vent panel 30 is used only as an internal wall of one surface of the accommodating cavity 101, connection by using the safety rope 80 is more proper than hinge connection. In addition, the region enclosed by the outer contour of the end that is of the safety rope 80 and that is fastened to the internal surface 31 is sealed and covered by the internal surface 31, so that a part that is of the explosion vent panel 30 and that is connected to the safety rope 80 is in a sealed state, and there is no need to provide a hole, thereby improving sealing performance.

FIG. 9 is a partial sectional view of another energy storage apparatus 1 according to an embodiment of this application, where a sectional position is a position at which a fastening assembly 40 is fastened to an explosion vent panel 30 and a housing 10. A main difference between this embodiment and the foregoing embodiments lies in that the housing 10 in this embodiment has a top wall 13, and the explosion vent panel 30 is mounted on the top wall 13 of the housing 10. For a bottom wall 14, a side wall 15, an explosion vent opening 102, a fastening hole 103, a screw 42, a through hole 461, and the like to be described in the following embodiment, reference may be made to the foregoing embodiments. Details are not described herein again.

Refer to FIG. 9. In some embodiments, the housing 10 includes the bottom wall 14, the top wall 13, and the side wall 15 that connects the bottom wall 14 and the top wall 13. The explosion vent opening 102 is provided on the top wall 13, and the explosion vent panel 30 is disposed on the top wall 13 and covers the explosion vent opening 102. The fastening hole 103 is a hole provided in a region that is of the top wall 13 and that overlaps with the explosion vent panel 30. The screw 42 successively passes through the fastening hole 103 on the top wall 13 in an extension direction, and is inserted into the through hole 461. In this embodiment, because the explosion vent panel 30 is mounted on the top wall 13, the fastening hole 103 may be directly provided on the top wall 13 without needing to additionally dispose the conversion bracket 16 provided in the foregoing embodiments.

The foregoing descriptions are only specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An energy storage apparatus having an explosion vent function, wherein the energy storage apparatus comprises a housing, an explosion vent panel, and a battery module, the explosion vent panel is located at the top or a side of the housing and enclosed with the housing to form an accommodating cavity, and the battery module is located in the accommodating cavity; and
the energy storage apparatus further comprises a stud and a screw that are configured to fasten the explosion vent panel to the housing, one end of the stud is fastened in a sealed manner to an internal surface that is of the explosion vent panel and that faces the accommodating cavity, the stud protrudes toward the accommodating cavity, a through hole is provided on an end face of the other end of the stud in an extension direction of the stud, a fastening hole is provided in a region that is of the housing and that overlaps with the explosion vent panel, and the screw located in the accommodating cavity passes through the fastening hole in an extension direction of the screw and is inserted into the through hole.

2. The energy storage apparatus according to claim 1, wherein the housing further comprises a conversion bracket located in the accommodating cavity, the conversion bracket comprises a side plate and a bottom plate that is parallel to the explosion vent panel, the side plate is fastened to the bottom plate, the bottom plate is the region that is of the housing and that overlaps with the explosion vent panel, the fastening hole is a hole provided on the bottom plate, the side plate is fastened to a side wall of the housing, and the screw successively passes through the fastening hole on the bottom plate in the extension direction and is inserted into the through hole.

3. The energy storage apparatus according to claim 2, wherein the energy storage apparatus further comprises a washer, the washer is located on a side that is of the bottom plate and that is away from the explosion vent panel, the washer is provided with an assembly hole that penetrates the washer, a diameter of the fastening hole is greater than a maximum radial size of the screw, a diameter of the assembly hole is greater than a radial size of a shank of the screw and less than a radial size of a head of the screw, and the screw successively passes through the assembly hole and the fastening hole and is inserted into the through hole.

4. The energy storage apparatus according to claim 3, wherein in an extension direction of the threaded hole, a gap is provided between the other end of the stud and the washer.

5. The energy storage apparatus according to any one of claims 1 to 4, wherein the energy storage apparatus further comprises a sleeve, the sleeve is sleeved on the stud, one end of the sleeve in an axial direction of the sleeve is in contact with a side that is of the washer and that faces the explosion vent panel, and the other end of the sleeve is in contact with a side that is of the explosion vent panel and that faces the accommodating cavity.

6. The energy storage apparatus according to any one of claims 1 to 3, wherein in the extension direction of the screw, the other end of the stud is in contact with a side that is of the washer and that faces the explosion vent panel.

7. The energy storage apparatus according to any one of claims 1 to 6, wherein one end of the stud is disposed in an integrated molding manner or a welding manner on the internal surface of the explosion vent panel.

8. The energy storage apparatus according to any one of claims 1 to 7, wherein the housing comprises a bottom wall and the side wall, in a height direction of the housing, the side wall is connected between the bottom wall and the explosion vent panel, and the bottom wall, the side wall, and the explosion vent panel are enclosed to form the accommodating cavity.

9. The energy storage apparatus according to any one of claims 1 to 7, wherein the housing comprises a bottom wall, a top wall, and a side wall that connects the bottom wall and the top wall, an explosion vent opening is provided on the top wall, the explosion vent panel is disposed on the top wall and covers the explosion vent opening, the fastening hole is a hole provided in a region that is of the top wall and that overlaps with the explosion vent panel, and the screw successively passes through the fastening hole on the top wall in the extension direction and is inserted into the through hole.

10. The energy storage apparatus according to any one of claims 1 to 8, wherein the energy storage apparatus further comprises a safety rope, one end of the safety rope is fastened in a sealed manner to the internal surface of the explosion vent panel, and the other end of the safety rope is connected to the housing.

11. An explosion vent structure, configured to be connected to a housing, wherein the explosion vent structure comprises an explosion vent panel, and the explosion vent panel is located at the top or a side of the housing and enclosed with the housing to form an accommodating cavity; and
the explosion vent structure further comprises a stud and a screw that are configured to fasten the explosion vent panel to the housing, one end of the stud is fastened in a sealed manner to an internal surface that is of the explosion vent panel and that faces the accommodating cavity, the stud protrudes toward the accommodating cavity, a through hole is provided on an end face of the other end of the stud in an extension direction of the stud, a fastening hole is provided in a region that is of the housing and that overlaps with the explosion vent panel, and the screw located in the accommodating cavity passes through the fastening hole in an extension direction of the screw and is inserted into the through hole.

12. An energy storage system, comprising a power converter and the energy storage apparatus according to any one of claims 1 to 10, wherein the power converter is connected to the energy storage apparatus, and is configured to perform power conversion on a current input to the energy storage apparatus or output from the energy storage apparatus.
